# EUROPÄISCHE PATENTSCHRIFT

(11) **EP 4 508 391 B1**
(45) Veröffentlichungstag und Bekanntmachung des Hinweises auf die Patenterteilung: **17.12.2025**
(21) Anmeldenummer: 24709337.0
(22) Anmeldetag: 01.03.2024
(51) Int. Cl.: G01C 21/32, G01C 21/00

(54) **COMPUTERIMPLEMENTIERTES VERFAHREN ZUR UBERTRAGUNG EINER NAVIGATIONSROUTE AUS EINER ERSTEN DIGITALEN STRASSENKARTE IN EINE ZWEITE DIGITALE STRASSENKARTE UND INFORMATIONSTECHNISCHES SYSTEM**
COMPUTER-IMPLEMENTED METHOD FOR TRANSFERRING A NAVIGATION ROUTE FROM A FIRST DIGITAL ROAD MAP TO A SECOND DIGITAL ROAD MAP, AND INFORMATION TECHNOLOGY SYSTEM
PROCÉDÉ MIS EN OEUVRE PAR ORDINATEUR POUR TRANSFERT D'UN ITINÉRAIRE DE NAVIGATION D'UNE PREMIÈRE CARTE ROUTIÈRE NUMÉRIQUE À UNE SECONDE CARTE ROUTIÈRE NUMÉRIQUE, ET SYSTÈME DE TECHNOLOGIE DE L'INFORMATION

(30) Priorität: 26.06.2023 DE 102023002572
(43) Veröffentlichungstag der Anmeldung: 19.02.2025
(73) Patentinhaber: Mercedes-Benz Group AG, 70372 Stuttgart (DE)
(72) Erfinder: LANGE, Benjamin, 71116 Gärtringen (DE); DIEBEL, Michael, 74172 Neckarsulm (DE)
(74) Vertreter: Novagraaf Group
(86) Internationale Anmeldenummer: PCT/EP2024/055358
(87) Internationale Veröffentlichungsnummer: WO 2025/002601

(56) Entgegenhaltungen:
- EP-A2- 1 102 228
- CN-A- 108 303 091
- DE-T2- 60 201 051
- JP-A- 2007 292 586
- US-A1- 2003 154 019
- US-A1- 2020 370 900
- US-A1- 2022 026 225

## Beschreibung

Die Erfindung betrifft ein computerimplementiertes Verfahren zur Übertragung einer Navigationsroute aus einer ersten digitalen Straßenkarte in eine zweite digitale Straßenkarte nach der im Oberbegriff von Anspruch 1 näher definierten Art sowie ein informationstechnisches System nach der im Oberbegriff von Anspruch 7 näher definierten Art.

Navigationssysteme erleichtern die Orientierung für einen Nutzer. Insbesondere wenn der Nutzer mit einem Fahrzeug einen Zielort in einer unbekannten Region aufsuchen möchte, führt ihn das entsprechende Navigationssystem zuverlässig ans Ziel. Entsprechende Navigationssysteme können dabei auch fest in ein Fahrzeug integriert sein.

Verschiedene Anwendungen erfordern es, eine Navigationsroute in einer ersten digitalen Straßenkarte zu erzeugen und zur Darstellung in eine zweite digitale Straßenkarte zu übertragen. Weisen die erste digitale Straßenkarte und die zweite digitale Straßenkarte eine unterschiedliche Version auf oder sind sogar von unterschiedlichen Kartenherstellern erzeugt worden, so kann es zu Fehlern bei der Übertragung kommen. So kann die Navigationsroute in der zweiten digitalen Straßenkarte von der Navigationsroute in der ersten digitalen Straßenkarte abweichen. Dies wird auch als sogenannter Übertragungsfehler oder *Matching-Fehler* bezeichnet.

Zur Erzeugung der Navigationsroute in der ersten digitalen Straßenkarte werden zuerst der Startort und der Zielort festgelegt. Danach ermittelt ein Algorithmus unter Berücksichtigung des Straßenverlaufs in Abhängigkeit verschiedenster Randbedingungen die jeweils optimale Route, beispielsweise die Route mit der kürzesten Wegstrecke und/oder die Route die zeitlich am schnellsten zurückgelegt werden kann. Entlang dieser Navigationsroute werden dann sogenannte Routenpunkte verteilt. Jedem Routenpunkt werden Ortskoordinaten zugeordnet, beispielsweise in Form von Geokoordinaten. Solche Geokoordinaten können durch einen Breitengrad und einen Längengrad beschrieben werden. Die Routenpunkte werden dann von der ersten digitalen Straßenkarte in die zweite digitale Straßenkarte übertragen. In der zweiten digitalen Straßenkarte muss dann die Route neu aus den Routenpunkten generiert werden. Der Straßenverlauf der digitalen Straßenkarte kann jedoch zum Straßenverlauf der ersten digitalen Straßenkarte abweichen. Beim Verbinden der Routenpunkte in der zweiten digitalen Straßenkarte können dann Umwege entstehen, also besagte Matching-Fehler.

Somit liegt das Erfordernis vor, Verfahren und Mittel bereitzustellen, die das Risiko des Auftretens von Matching-Fehlern beim Übertragen einer Navigationsroute aus einer ersten digitalen Straßenkarte in eine zweite digitale Straßenkarte reduzieren. Vorzugsweise soll dies mit einem möglichst geringen technischen Aufwand möglich sein.

Ein Verfahren zur Übertragung einer Navigationsroute aus einer ersten digitalen Straßenkarte in eine zweite digitale Straßenkarte ist beispielsweise aus der DE 602 01 051 T2 bekannt. Die Druckschrift beschreibt ein Positionsinformationen-Sendeverfahren und eine Einrichtung für eine digitale Landkarte. Nachteilig ist dabei jedoch, dass von der ersten digitalen Straßenkarte in die zweite digitale Straßenkarte zu übertragende Routenpunkte sowohl vor dem Versenden, als auch nach dem Empfangen aufbereitet werden müssen. So erzeugt die Sendeseite zusätzliche Informationen, die es der Empfangsseite erlauben, ein genaueres Platzieren der Routenpunkte in der zweiten digitalen Straßenkarte durchzuführen. Entsprechend hoch ist der zur Durchführung des in der Druckschrift offenbarten Verfahrens erforderliche technische Aufwand.

Die DE 102009047407 A1 beschreibt ein Verfahren zur Vereinfachung einer Beschreibung einer Fahrtroute. Die Fahrtroute ist durch eine Liste von Routenpunkten repräsentiert, wobei das Verfahren einen Schritt des Einlesens einer Fahrtroute aufweist, die durch eine Liste von Routenpunkten abgebildet wird, die eine Mehrzahl von Routenpunkten repräsentiert, wobei jeder Routenpunkt ein unterschiedliches Teilsegment einer Fahrtroute aus einer digitalen Straßenkarte repräsentiert. Ferner umfasst das Verfahren einen Schritt des Veränderns der Liste von Routenpunkten entsprechend einem vorbestimmten Algorithmus, um eine veränderte Liste von Routenpunkten zu erhalten, die die Fahrtroute repräsentiert. Schließlich weist das Verfahren einen Schritt des Abspeicherns der veränderten Liste von Routenpunkten auf, um eine Vereinfachung der Beschreibung der Fahrtroute zu erreichen.

Aus der JP 2007292586 A ist ein Verfahren bekannt, bei dem die aktuelle Position sowie ein Ziel vom Navigationssystem an ein Routenplanungscenter gesendet werden. Das Routenplanungscenter überträgt Navigationsdaten an das Navigationssystem umfassend Positionsdaten von mehreren Routen-Wegpunkten von vorgeschlagenen Routen von der aktuellen Position zum Ziel. Wenn das Navigationssystem eine Routenführung ausführt, setzt es nacheinander Wegpunkte an jedem der Mittelpunkte zwischen einem Wegpunkt und dem folgenden Punkt in Bezug auf die übermittelten Wegpunkte des Routenplanungscenters. Die Wegpunkte der Mittelpunkte werden nacheinander zu einer Route verbunden und bilden die Routenführung.

Ferner offenbart die CN 108 303 091 A ein Verfahren und System zum Generieren einer Trajektorie. Dabei wird mit Hilfe eines Navigationssystems eine Navigationsroute berechnet und ein Driftpunkt in der Navigationsroute ermittelt. Der Driftpunkt kann einer von drei Kategorien entsprechen, wobei ein in Abhängigkeit der Kategorie gewählter Filteralgorithmus auf den Driftpunkt angewendet wird. Dabei können zwischen Knotenpunkten liegende Knoten aus der Trajektorie entfernt werden.

Der vorliegenden Erfindung liegt die Aufgabe zugrunde ein verbessertes computerimplementiertes Verfahren zur Übertragung einer Navigationsroute aus einer ersten digitalen Straßenkarte in eine zweite digitale Straßenkarte anzugeben, welches es mit geringem technischen Aufwand ermöglicht, das Auftreten sogenannter Matching-Fehler beim Übertragen der Navigationsroute zu reduzieren oder sogar zu verhindern.

Erfindungsgemäß wird diese Aufgabe durch ein computerimplementiertes Verfahren zur Übertragung einer Navigationsroute mit den Merkmalen des Anspruchs 1 gelöst. Vorteilhafte Ausgestaltungen und Weiterbildungen sowie ein informationstechnisches System zur Ausführung des Verfahrens ergeben sich aus den hiervon abhängigen Ansprüchen.

Ein gattungsgemäßes computerimplementiertes Verfahren zur Übertragung einer Navigationsroute aus einer ersten digitalen Straßenkarte in eine zweite digitale Straßenkarte, wobei eine Vielzahl entlang der Navigationsroute verlaufende Routenpunkte in der ersten digitalen Straßenkarte ermittelt werden, zumindest einige der Routenpunkte in die zweite digitale Straßenkarte übertragen werden und in der zweiten digitalen Straßenkarte zur Erzeugung der Navigationsroute jeweils zueinander benachbarte Routenpunkte durch Routensegmente miteinander verbunden werden, wird erfindungsgemäß dadurch weitergebildet, dass Routenpunkte, welche sich in der ersten oder der zweiten digitalen Straßenkarte im Bereich einer Straßenkreuzung befinden, gelöscht werden, bevor die Routensegmente zwischen den Routenpunkten gezogen werden.

Matching-Fehler treten besonders häufig im Bereich von Kreuzungen bzw. Einmündungen auf. Durch das Entfernen der im Kreuzungsbereich liegenden Routenpunkte lässt sich somit das Auftreten von Matching-Fehlern im Bereich von Kreuzungen reduzieren oder gar vermeiden. Das Entfernen der Routenpunkte kann sowohl in der ersten digitalen Straßenkarte vor dem Übertragen der Routenpunkte erfolgen oder auch in der zweiten digitalen Straßenkarte, nachdem die Routenpunkte empfangen wurde, jedoch bevor die Routensegmente zum Verbinden der Routenpunkte gezogen werden. Besonders vorteilhaft werden die Routenpunkte dabei vor der Übertragung an die zweite digitale Straßenkarte gelöscht, da somit weniger Informationen zu übertragen sind.

Dabei können verschiedene Grenzen festgelegt werden, bis zu welcher örtlichen Entfernung zu einer Straßenkreuzung ein Routenpunkt als "im Bereich einer Straßenkreuzung liegend" erachtet wird. Beispielsweise können nur solche Routenpunkte als im Bereich einer Straßenkreuzung liegend erachtet werden, welche unmittelbar auf der Straßenkreuzung selbst liegen. In einer Straßenkreuzung treffen sich wenigstens zwei Straßen bzw. wenigstens drei Straßenabschnitte. Es können auch solche Routenpunkte als im Bereich der Straßenkreuzung liegend erachtet werden, welche von diesem Kreuzungspunkt in einer vorgegebenen Entfernung auf einem jeweiligen Straßenabschnitt liegen, beispielsweise ein Meter, fünf Meter, zehn Meter oder auch Bruchteile oder Vielfache hiervon. Wird diese Entfernung zu klein gewählt, so besteht die Gefahr, dass bei vergleichsweise großen Abweichungen zwischen der ersten und der zweiten digitalen Straßenkarte dennoch Matching-Fehler auftreten. Wird diese Entfernung hingegen zu groß gewählt, so besteht die Gefahr, dass ein relevanter Teil der Navigationsroute unnötigerweise gelöscht wird. Dies ist jedoch weniger tragisch, da zur Not in der zweiten digitalen Straßenkarte, passend zum dortigen Straßenverlauf, erneut ein passender Routenverlauf ermittelt wird.

Straßenkreuzungen können auf verschiedene Art und Weise in einer digitalen Straßenkarte identifiziert werden. So kann ein entsprechender Algorithmus beispielsweise den Straßenverlauf analysieren und im Schnittpunkt von zumindest zwei aufeinandertreffenden Straßen einen Kreuzungspunkt erkennen. Kreuzungen können in einer digitalen Straßenkarte auch bereits vorgemerkt sein. So können Straßen oder einzelnen Straßensegmenten, bzw. Kartenobjekten im Allgemeinen, Informationen zugeordnet sein, wie eine Identifikationsnummer, Eigenschaften und dergleichen. Entsprechend wird einer Straße in einem bestimmen geografischen Punkt bzw. einem Straßenabschnitt die Information "Kreuzung" zugeordnet.

Eine vorteilhafte Weiterbildung des erfindungsgemäßen Verfahrens sieht vor, dass eine Recheneinheit zur Ermittlung der zu löschenden Routenpunkte:
- für alle vorhandenen Routenpunkte, beginnend beim ersten Routenpunkt und endend beim letzten Routenpunkt: die Ortskoordinaten von jeweils drei aufeinanderfolgenden Routenpunkten miteinander vergleicht; und wenn:
- die Längenkoordinate des mittleren Routenpunkts der im jeweiligen Iterationsschritt betrachteten drei Routenpunkte nicht zwischen den jeweiligen Längenkoordinaten der anderen Routenpunkte liegt und/oder die Breitenkoordinate des mittleren Routenpunkts nicht zwischen den jeweiligen Breitenkoordinaten der anderen Routenpunkte liegt;
- den mittleren Routenpunkt löscht; und danach oder ansonsten
- einen Routenpunkt weiter springt.

Hierdurch ist ein besonders einfacher und damit recheneffizienter und schneller Algorithmus gegeben, um Routenpunkte zu löschen. Mit anderen Worten handelt es sich bei den gemäß des derart beschriebenen Algorithmus zu löschenden Routenpunkte um Eckpunkte der Navigationsroute. Solche Eckpunkte liegen typischerweise im Kreuzungsbereich einer Straßenkreuzung. Somit ist es nicht erforderlich weitere Informationen aus einer digitalen Straßenkarte auszulesen, welche beschreiben, dass es sich um eine Straßenkreuzung handelt, oder gar den Straßenverlauf selbst in der digitalen Straßenkarte zu analysieren. Somit lässt sich das erfindungsgemäße Verfahren noch schneller und effizienter ausführen.

Es müssen lediglich die Ortskoordinaten der Routenpunkte in der Navigationsroute miteinander verglichen werden. Dabei werden immer Dreierpaare zueinander benachbarter Routenpunkte miteinander abgeglichen. Zu Beginn werden der erste, zweite und dritte Routenpunkt miteinander verglichen. Wurde der Iterationsschritt durchgeführt, so springt die Recheneinheit zum nächsten Routenpunkt. Dies heißt, dass nun der zweite, dritte und vierte Routenpunkt miteinander abgeglichen werden. Im nächsten Iterationsschritt werden dann der dritte, vierte und fünfte Routenpunkt miteinander abgeglichen usw. Wird im jeweiligen Iterationsschritt der mittlere Routenpunkt gelöscht, so werden im nächsten Iterationsschritt die beiden verbleibenden Routenpunkte mit dem nächsten Routenpunkt abgeglichen.

Entsprechend einer weiteren vorteilhaften Ausgestaltung des erfindungsgemäßen Verfahrens, wird die erste digitale Straßenkarte auf einer ersten Recheneinheit vorgehalten und die zweite digitale Straßenkarte auf einer zweiten Recheneinheit. Das erfindungsgemäße Verfahren lässt sich somit besonders effizient auch dann einsetzen, wenn die verschiedenen digitalen Straßenkarten durch unterschiedliche Recheneinheiten verwaltet bzw. vorgehalten werden. Das Löschen der Routenpunkte kann dabei sowohl auf der ersten Recheneinheit, als auch auf der zweiten Recheneinheit erfolgen. Generell wäre es auch denkbar, dass eine dritte Recheneinheit vorgesehen ist, welche als vermittelnde Recheneinheit zwischen der ersten und zweiten Recheneinheit dient. In diesem Falle können die Routenpunkte auch auf der dritten Recheneinheit gelöscht werden. Besonders bevorzugt werden dabei die Routenpunkte auf der ersten Recheneinheit gelöscht, da somit weniger Informationen übertragen werden müssen.

Bevorzugt wird als erste Recheneinheit eine in ein Fahrzeug integrierte oder eine in einen Server oder Serververbund integrierte Recheneinheit verwendet. Bei der ersten Recheneinheit kann es sich also um das Navigationssystem eines Fahrzeugs handeln oder eine mit dem Navigationssystem des Fahrzeugs gekoppelte Recheneinheit. Es wird also die Navigationsroute in der ersten digitalen Straßenkarte im Fahrzeug selbst berechnet. Verschiedene Fahrzeughersteller bieten das Auslagern der Routenberechnung auf einem Cloudserver an. Bei dem Server bzw. Serververbund handelt es sich also um den von einem Fahrzeughersteller betriebenen Cloudserver. Auf diesem Cloudserver wird dann die Navigationsroute in der ersten digitalen Straßenkarte berechnet und zur Anwendung in das Fahrzeug übertragen. Typischerweise verwenden dabei das Fahrzeug und der Server dasselbe Kartenmaterial, greifen also beide auf die erste digitale Straßenkarte zu. Es handelt sich hierbei um einen besonders relevanten Anwendungsfall für die Anwendung des erfindungsgemäßen Verfahrens.

Entsprechend einer weiteren vorteilhaften Ausgestaltung des erfindungsgemäßen Verfahrens erlaubt die zweite Recheneinheit einen Zugriff auf die zweite digitale Straßenkarte über eine Anwendungsprogrammierschnittstelle. Bei der zweiten Recheneinheit handelt es sich bevorzugt um eine fahrzeugexterne Recheneinheit sowie, sollte die zweite Recheneinheit ebenfalls in einen Server oder Serverbund integriert sein, bzw. einen solchen Ausbilden, um einen zum Cloudserver des Fahrzeugherstellers abweichenden Server bzw. Serververbund. Die zweite Recheneinheit kann von einem Dienstleister betrieben werden.

Mittels einer Anwendungsprogrammierschnittstelle, auch als Application-Programming-Interface (API) bezeichnet, wird es verschiedenen Nutzern und Diensten ermöglicht, auf die zweite digitale Straßenkarte und damit auf die Navigationsroute zuzugreifen. Dies ermöglicht das Bereitstellen der verschiedensten Dienstleistungen.

Bevorzugt wird über die Anwendungsprogrammierschnittstelle ein Zugriff auf die zweite digitale Straßenkarte per Weboberfläche bereitgestellt. Dies stellt einen weiteren besonders relevanten Anwendungsfall zur Durchführung des erfindungsgemäßen Verfahrens dar. So können Navigationsrouten für Fahrzeuge in Fahrzeugen selbst bzw. auf dem Backend eines Fahrzeugherstellers generiert werden. Diese Navigationsrouten können dann über eine Weboberfläche, beispielsweise unter Verwendung eines Internetbrowsers, eingesehen werden. Typischerweise wird ein externer Dienstleister die zweite Recheneinheit betreiben und entsprechend hierzu eine andere digitale Straßenkarte einsetzen als der Fahrzeughersteller.

Bei einem informationstechnischen System, umfassend wenigstens eine Recheneinheit, ist erfindungsgemäß die wenigstens eine Recheneinheit zur Ausführung eines im vorigen beschriebenen Verfahrens eingerichtet. Im einfachsten Fall werden die erste digitale Straßenkarte und die zweite digitale Straßenkarte auf ein und derselben Recheneinheit vorgehalten bzw. verwaltet. Das Übertragen der Navigationsroute kann somit auf ein und derselben Recheneinheit erfolgen. Es ist, wie im vorigen bereits erwähnt, jedoch auch möglich, dass die erste digitale Straßenkarte und die zweite digitale Straßenkarte auf unterschiedlichen Recheneinheiten vorgehalten werden. Die Kommunikation zwischen den Recheneinheiten kann auf verschiedene Art und Weise erfolgen. So können die beiden Recheneinheiten an ein gemeinsames Kommunikationsnetzwerk, beispielsweise ein Local-Area-Network (LAN), angeschlossen sein. Die Recheneinheiten können jedoch auch beispielsweise über das Internet miteinander in Kommunikationsverbindung stehen.

Handelt es sich bei der ersten Recheneinheit um eine fahrzeuginterne Recheneinheit, so können entsprechende Informationen auch per Mobilfunk, insbesondere mittelbar über das Internet, an die zweite Recheneinheit versendet werden. Hierzu kann das Fahrzeug weitere Mittel aufweisen, wie beispielsweise eine sogenannte Telekommunikationseinheit, auch als Telematikeinheit bezeichnet.

Weitere vorteilhafte Ausgestaltungen des erfindungsgemäßen computerimplementierten Verfahrens zur Übertragung einer Navigationsroute aus einer ersten digitalen Straßenkarte in eine zweite digitale Straßenkarte ergeben sich auch aus den Ausführungsbeispielen, welche nachfolgend unter Bezugnahme auf die Figuren näher beschrieben werden.

Dabei zeigen:
- Fig. 1: eine schematische Darstellung auf eine Navigationsroute in einer ersten digitalen Straßenkarte;
- Fig. 2: eine schematische Darstellung einer fehlerhaft in eine zweite digitale Straßenkarte übertragenen Navigationsroute;
- Fig. 3: eine schematische Darstellung einer mittels eines erfindungsgemäßen Verfahrens korrekt in die zweite digitale Straßenkarte übertragenen Navigationsroute;
- Fig. 4: ein schematischer Ablauf eines erfindungsgemäßen Algorithmus zum Löschen unplausibler Routenpunkte; und
- Fig. 5: einen beispielhaften Code des durch Figur 4 veranschaulichten Algorithmus.

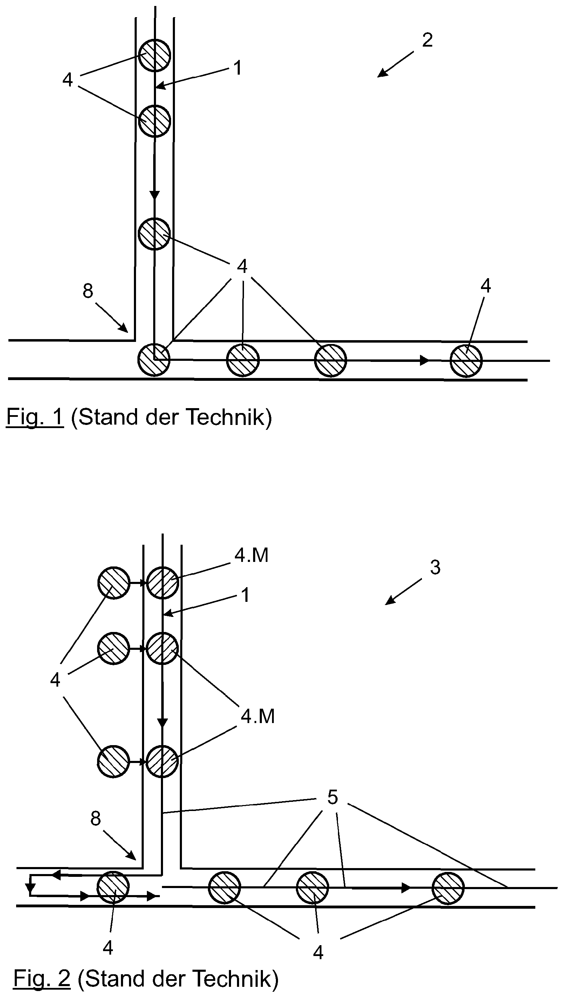

Figur 1 zeigt eine erste digitale Straßenkarte 2, wobei im Detail der Bereich einer Straßenkreuzung 8 dargestellt ist. Bei der Straßenkreuzung 8 kann es sich, wie in den Figuren gezeigt, um eine T-Kreuzung handeln. Es kann sich jedoch auch um eine sonstige andere Kreuzung handeln, beispielsweise eine Vier-Wege-Kreuzung, insbesondere eine Plus-Kreuzung, eine Y-Verzweigung, eine Auf- oder Ausfahrt, oder dergleichen.

Auf übliche Art und Weise wird in der ersten digitalen Straßenkarte 2 durch eine Recheneinheit eine Navigationsroute 1 ermittelt, welche von einem Startort zu einem Zielort führt. Entlang der Navigationsroute 1 werden daraufhin Routenpunkte 4 bestimmt. Ein jeweiliger Routenpunkt 4 ist durch eine eindeutige Ortsinformation, insbesondere Ortskoordinaten, besonders bevorzugt Geokoordinaten, beschrieben. Die Routenpunkte 4 werden in eine in Figur 2 gezeigte zweite digitale Straßenkarte 3 übertragen, um letztendlich die Navigationsroute 1 in die zweite digitale Straßenkarte 3 zu übertragen. Nachdem die Routenpunkte 4 in die zweite digitale Straßenkarte 3 übertragen wurden, werden die Routenpunkte 4 dort durch Routensegmente 5 miteinander verbunden.

Aufgrund von Unterschieden im Kartenmaterial, kann es beim Übertragen der Navigationsroute 1 zu Abweichungen kommen. Figur 2 zeigt dabei die aus der ersten digitalen Straßenkarte 2 in die zweite digitale Straßenkarte 3 übertragenen Routenpunkte 4. Die Routenpunkte 4 weisen dabei die ursprünglichen Ortskoordinaten aus der ersten digitalen Straßenkarte 2 auf. Zumindest einige der Routenpunkte 4 aus der ersten digitalen Straßenkarte 2 sind bezüglich des Straßenverlaufs in der zweiten digitalen Straßenkarte 3 nach Westen verschoben. Durch Anwenden von bewährten Übertragungs- oder Matching-Verfahren werden die Routenpunkte 4 an den Straßenverlauf in der zweiten digitalen Straßenkarte 3 angepasst, sodass gematchte Routenpunkte 4.M erzeugt werden. Die nach der Abbiegung vorliegenden Routenpunkte 4 müssen dabei nicht verschoben werden, da sie in der zweiten digitalen Straßenkarte 3 bereits auf der Straße liegen. Darauf aufbauend werden die Routensegmente 5 generiert, und somit die Navigationsroute 1 erhalten. Wie Figur 2 zeigt, entsteht hierdurch ein unzulässiger Umweg im Kreuzungsbereich.

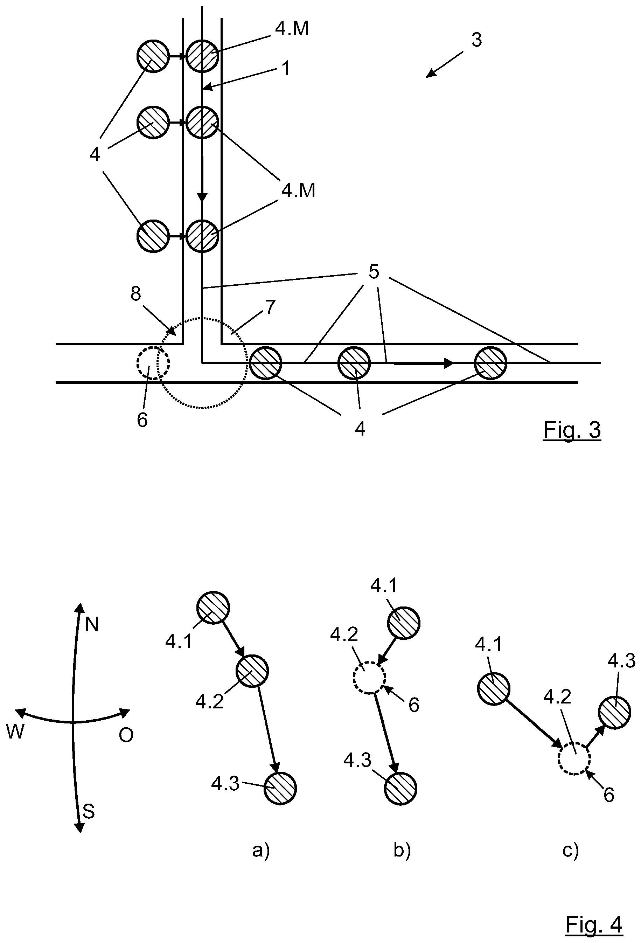

Ein erfindungsgemäßes computerimplementiertes Verfahren sieht nun vor, wie Figur 3 zeigt, Routenpunkte 6, welche sich in der ersten 2 oder der zweiten digitalen Straßenkarte 3 im Bereich 7 der Straßenkreuzung 8 befinden, gelöscht werden, bevor die Routensegmente 5 zwischen den Routenpunkten 4 gezogen werden. Somit wird kein Umweg in die in der zweiten digitalen Straßenkarte 3 generierte Navigationsroute 1 eingebaut. Der Bereich 7 kann dabei in Abhängigkeit unterschiedlichster Ausführungsformen bestimmt werden. Beispielsweise kann im Mittelpunkt einer Straßenkreuzung 8 ein Kreis mit einem fest vorgegebenen Radius gezogen werden, wobei innerhalb des Kreises liegende Routenpunkte 6 zu löschen sind.

Besonders bevorzugt führt die Recheneinheit zur Ermittlung der zu löschenden Routenpunkte 6 einen erfindungsgemäßen Algorithmus aus, welcher anhand von Figur 4 erläutert wird. So zeigt Figur 4 in den Unterfiguren a), b) und c) jeweils drei unterschiedliche benachbarte Routenpunkte 4.1, 4.2, 4.3. Der erfindungsgemäße Algorithmus sieht vor, jeweils drei benachbarte Routenpunkte 4.1, 4.2, 4.3 aus der Gesamtmenge der Routenpunkte 4 zu vergleichen. Hierzu werden die jeweiligen Längenkoordinaten und Breitenkoordinaten der Routenpunkte 4.1, 4.2, 4.3 miteinander verglichen. Die Längenkoordinaten und Breitenkoordinaten können beispielsweise im Bezug zu den vier Himmelsrichtungen Nord, Süd sowie Ost und West definiert sein, was in Figur 4 durch einen beispielshaften Längengrad und Breitengrad angedeutet ist. Es kann jedoch auch ein anderes Referenzsystem genutzt werden, beispielsweise Koordinaten eines kartesischen Koordinatensystems oder dergleichen.

Eckpunkte werden gelöscht. So zeigt Figur 4b), dass der mittlere Routenpunkt 4.2 eine geringere Längenkoordinate aufweist, als die beiden verbleibenden Routenpunkte 4.1 und 4.3. Somit ist der Routenpunkt 4.2 zu löschen. Analog zeigt Figur 4c), dass der mittlere Routenpunkt 4.2 eine geringere Breitenkoordinate aufweist, als die beiden verbleibenden Routenpunkte 4.1 und 4.3. Somit ist auch dieser Routenpunkt 4.2 zu löschen. In Figur 4a) liegen hingegen die Längenkoordinate und die Breitenkoordinate des mittleren Routenpunkts 4.2 zwischen den jeweiligen Längenkoordinaten und Breitenkoordinaten der übrigen Routenpunkte 4.1 und 4.3, sodass der Routenpunkt 4.2 erhalten bleibt.

Mit Hilfe des durch Figur 4 veranschaulichten Algorithmus lassen sich im Bereich 7 einer Straßenkreuzung 8 liegende Routenpunkte besonders leicht und mit einem geringen Rechenaufwand identifizieren und löschen. Dies steigert die Effizienz des erfindungsgemäßen Verfahrens.

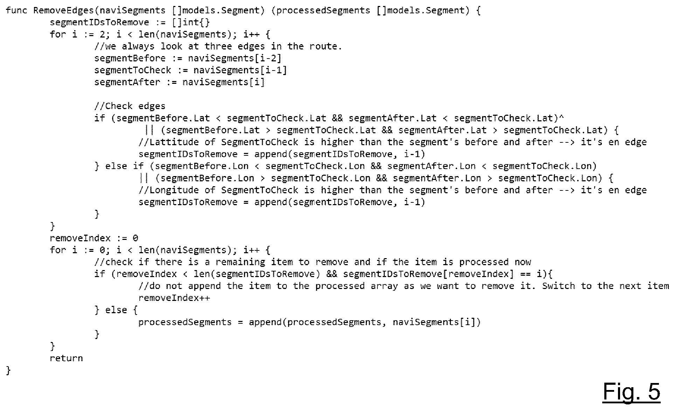

Figur 5 zeigt einen möglichen Code zur Realisierung des durch Figur 4 veranschaulichten Algorithmus.

Besonders bevorzugt werden die Routenpunkte 4 mittels des Algorithmus verarbeitet, bevor die jeweiligen Routenpunkte 4 von der ersten digitalen Straßenkarte 2 in die zweite digitale Straßenkarte 3 übertragen werden. Somit werden vorab zu löschende Routenunkte 6 eliminiert, bevor die Daten übertragen werden. Somit müssen insgesamt weniger Daten übertragen werden. Zudem können in der zweiten digitalen Straßenkarte 3 bewährte Matching-Algorithmen eingesetzt werden, um gematchte Routenpunkte 4.M in der zweiten digitalen Straßenkarte 3 zu ermitteln, sollte dies erforderlich sein. Dies verbessert die Einsetzbarkeit des erfindungsgemäßen Verfahrens. Mit Hilfe des erfindungsgemäßen Verfahrens ist es somit möglich, mit einem geringen technischen Aufwand zuverlässig das Auftreten von Matching-Fehlern beim Übertragen einer Navigationsroute 1 aus einer ersten digitalen Straßenkarte 2 in eine zweite digitale Straßenkarte 3 zu verringern.

## Patentansprüche

1. Computerimplementiertes Verfahren zur Übertragung einer Navigationsroute (1) aus einer ersten digitalen Straßenkarte (2) in eine zweite digitale Straßenkarte (3), wobei eine Vielzahl entlang der Navigationsroute (1) verlaufende Routenpunkte (4) in der ersten digitalen Straßenkarte (2) ermittelt werden, zumindest einige der Routenpunkte (3) in die zweite digitale Straßenkarte (3) übertragen werden und in der zweiten digitalen Straßenkarte (3) zur Erzeugung der Navigationsroute (1) jeweils zueinander benachbarte Routenpunkte (4) durch Routensegmente (5) miteinander verbunden werden,
**dadurch gekennzeichnet, dass**
Routenpunkte (6) welche sich in der ersten (2) oder der zweiten digitalen Straßenkarte (3) im Bereich (7) einer Straßenkreuzung (8) befinden gelöscht werden, bevor die Routensegmente (5) zwischen den Routenpunkten (4) gezogen werden.

2. Verfahren nach Anspruch 1,
**dadurch gekennzeichnet, dass**
eine Recheneinheit zur Ermittlung der zu löschenden Routenpunkte (6):
- für alle vorhandenen Routenpunkte (4, 6), beginnend beim ersten Routenpunkt und endend beim letzten Routenpunkt: Die Ortskoordinaten von jeweils drei aufeinanderfolgenden Routenpunkten (4.1, 4.2, 4.3) miteinander vergleicht; und wenn:
- die Längenkoordinate des mittleren Routenpunkts (4.2) der im jeweiligen Iterationsschritt betrachteten drei Routenpunkte (4.1, 4.2, 4.3) nicht zwischen den jeweiligen Längenkoordinaten der anderen Routenpunkte (4.1, 4.3) liegt und/oder die Breitenkoordinate des mittleren Routenpunkts (4.2) nicht zwischen den jeweiligen Breitenkoordinaten der anderen Routenpunkte (4.1, 4.3) liegt;
- den mittleren Routenpunkt (4.2, 6) löscht; und danach oder ansonsten
- einen Routenpunkt (4) weiter springt.

3. Verfahren nach Anspruch 1 oder 2,
**dadurch gekennzeichnet, dass**
die erste digitale Straßenkarte (2) auf einer ersten Recheneinheit vorgehalten wird und die zweite digitale Straßenkarte (3) auf einer zweiten Recheneinheit vorgehalten wird.

4. Verfahren nach Anspruch 3,
**dadurch gekennzeichnet, dass**
als erste Recheneinheit eine in ein Fahrzeug integrierte oder eine in einen Server oder Serververbund integrierte Recheneinheit verwendet wird.

5. Verfahren nach Anspruch 3 oder 4,
**dadurch gekennzeichnet, dass**
die zweite Recheneinheit einen Zugriff auf die zweite digitale Straßenkarte (3) über eine Anwendungsprogrammierschnittstelle erlaubt.

6. Verfahren nach Anspruch 5,
**dadurch gekennzeichnet, dass**
über die Anwendungsprogrammierschnittstelle ein Zugriff auf die zweite digitale Straßenkarte (3) per Weboberfläche bereitgestellt wird.

7. Informationstechnisches System, umfassend wenigstens eine Recheneinheit, **dadurch gekennzeichnet, dass**
die wenigstens eine Recheneinheit zur Ausführung eines Verfahrens nach einem der Ansprüche 1 bis 6 eingerichtet ist.

## Claims

1. Computer-implemented method for transferring a navigation route (1) from a first digital road map (2) to a second digital road map (3), a plurality of route points (4) which run along the navigation route (1) being determined in the first digital road map (2), at least some of the route points (3) being transferred to the second digital road map (3), and in the second digital road map (3), to generate the navigation route (1), adjacent route points (4) being connected to one another by route segments (5),
**characterized in that**
route points (6) which are located in the first (2) or the second digital road map (3) in the region (7) of a road intersection (8) are deleted before the route segments (5) are drawn between the route points (4).

2. Method according to claim 1,
**characterized in that**
a computing unit for determining the route points (6) to be deleted:
- for all existing route points (4, 6), starting with the first route point and ending with the last route point: compares the location coordinates of three consecutive route points (4.1, 4.2, 4.3) with each other; and if:
- the longitude coordinate of the middle route point (4.2) of the three route points (4.1, 4.2, 4.3) considered in the particular iteration step does not lie between the respective longitude coordinates of the other route points (4.1, 4.3) and/or the latitude coordinate of the middle route point (4.2) does not lie between the respective latitude coordinates of the other route points (4.1, 4.3);
- deletes the middle route point (4.2, 6); and then or otherwise
- jumps one route point (4) further.

3. Method according to claim 1 or claim 2,
**characterized in that**
the first digital road map (2) is stored on a first computing unit and the second digital road map (3) is stored on a second computing unit.

4. Method according to claim 3,
**characterized in that**
a computing unit integrated into a vehicle or integrated into a server or server network is used as the first computing unit.

5. Method according to claim 3 or claim 4,
**characterized in that**
the second computing unit allows access to the second digital road map (3) via an application programming interface.

6. Method according to claim 5,
**characterized in that**
access to the second digital road map (3) is provided via the application programming interface via a web interface.

7. Information technology system comprising at least one computing unit,
**characterized in that**
the at least one computing unit is configured to carry out a method according to any of claims 1 to 6.

## Revendications

1. Procédé mis en œuvre par ordinateur pour le transfert d'un itinéraire de navigation (1) d'une première carte routière numérique (2) à une seconde carte routière numérique (3), dans lequel une pluralité de points d'itinéraire (4) s'étendant le long de l'itinéraire de navigation (1) est déterminée dans la première carte routière numérique (2), au moins quelques-uns des points d'itinéraire (3) sont transférés à la seconde carte routière numérique (3) et des points d'itinéraire (4) respectivement adjacents les uns aux autres sont reliés entre eux par des segments d'itinéraire (5) dans la seconde carte routière numérique (3) pour générer l'itinéraire de navigation (1),
**caractérisé en ce que**
des points d'itinéraire (6) qui se trouvent dans la première (2) ou dans la seconde carte routière numérique (3) dans la zone (7) d'une intersection de routes (8) sont effacés avant que les segments d'itinéraire (5) ne soient tracés entre les points d'itinéraire (4).

2. Procédé selon la revendication 1,
**caractérisé en ce que**
une unité de calcul pour la détermination des points d'itinéraire (6) à effacer :
- pour tous les points d'itinéraire (4, 6) existants, en commençant par le premier point d'itinéraire et en terminant par le dernier point d'itinéraire : compare les coordonnées locales de respectivement trois points d'itinéraire successifs (4.1, 4.2, 4.3) ; et si :
- la coordonnée de longueur du point d'itinéraire central (4.2) des trois points d'itinéraire (4.1, 4.2, 4.3) considérés dans l'étape d'itération respective ne se situe pas entre les coordonnées de longueur respectives des autres points d'itinéraire (4.1, 4.3) et/ou la coordonnée de largeur du point d'itinéraire central (4.2) ne se situe pas entre les coordonnées de largeur respectives des autres points d'itinéraire (4.1, 4.3) ;
- efface le point d'itinéraire central (4.2, 6) ; et ensuite ou sinon
- saute un point d'itinéraire (4) plus loin.

3. Procédé selon la revendication 1 ou 2,
**caractérisé en ce que**
la première carte routière numérique (2) est conservée sur une première unité de calcul et la seconde carte routière numérique (3) est conservée sur une seconde unité de calcul.

4. Procédé selon la revendication 3,
**caractérisé en ce que**
une unité de calcul intégrée dans un véhicule ou une unité de calcul intégrée dans un serveur ou un réseau de serveurs est utilisée comme première unité de calcul.

5. Procédé selon la revendication 3 ou 4,
**caractérisé en ce que**
la seconde unité de calcul permet un accès à la seconde carte routière numérique (3) par l'intermédiaire d'une interface de programmation d'application.

6. Procédé selon la revendication 5,
**caractérisé en ce que**
un accès à la seconde carte routière numérique (3) est fourni en passant par une interface Web par l'intermédiaire de l'interface de programmation d'application.

7. Système informatique, comprenant au moins une unité de calcul,
**caractérisé en ce que**
l'au moins une unité de calcul est configurée pour la mise en œuvre d'un procédé selon l'une des revendications 1 à 6.
